Europäisches Patentamt

European Patent Office

Office européen des brevets

(19)

(11) Numéro de publication: **0 109 404**
**B1**

(12) **FASCICULE DE BREVET EUROPEEN**

(45) Date de publication du fascicule du brevet:
**27.01.88**

(51) Int. Cl.⁴: **A 61 C 11/00**

(21) Numéro de dépôt: **83901384.4**

(22) Date de dépôt: **18.05.83**

(86) Numéro de dépôt international:
**PCT/FR 83/00094**

(87) Numéro de publication internationale:
**WO 83/03962 (24.11.83 Gazette 83/27)**

(54) **ARTICULATEUR POUR L'ART DENTAIRE.**

(30) Priorité: **19.05.82 FR 8209080**

(43) Date de publication de la demande:
**30.05.84 Bulletin 84/22**

(45) Mention de la délivrance du brevet:
**27.01.88 Bulletin 88/4**

(84) Etats contractants désignés:
**BE CH DE GB LI LU NL SE**

(56) Documents cités:
**WO - A - 80/01136**
**DE - A - 2 922 153**
**DE - A - 3 036 109**
**US - A - 3 350 782**
**US - A - 4 242 087**

(73) Titulaire: **FABRICATIONS AUTOMATIQUES GERBELOT, 647, chemin de l'Epinette, F-74300 Cluses (FR)**

(72) Inventeur: **Gerbelot-Barrillon, Pierre, Chemin de l'Epinette, F-74300 Cluses (FR)**

(74) Mandataire: **de Beaumont, Michel, Cabinet Poncet 7, chemin de Tillier B.P. 317, F-74008 Annecy Cédex (FR)**

## Description

La présente invention concerne les articulateurs pour l'art dentaire, utilisés pour la réalisation de travaux d'analyses occlusales et de prothèses dentaires.

Ces appareils permettent, en servant de support à des moulages de mâchoires inférieures et supérieures, de reproduire les mouvements mandibulaires.

Les articulateurs habituellement utilisés comprennent un membre inférieur dont la partie antérieure supporte une platine inférieure et un plateau incisif, et dont la partie postérieure comprend des branches verticales sur lesquelles s'articule un membre supérieur. Le membre supérieur comporte un moyeu postérieur, solidaire d'une platine supérieure qui reçoit dans sa partie antérieure une tige incisive venant en appui sur le plateau incisif pour positionner le membre supérieur par rapport à la platine inférieure.

Les articulations reliant le membre supérieur et le membre inférieur sont habituellement de deux types: un premier type consiste à prévoir des boules condyliennes solidaires de chacune des deux branches verticales du membre inférieur, et sur lesquelles viennent s'adapter des logements adéquats ménagés sur les extrémités du moyeu du membre supérieur; un second type consiste à disposer des boules condyliennes sur les extrémités du moyeu, les boules venant s'engager dans des logements adéquats prévus sur les extrémités des branches verticales du membre inférieur. La présente invention apporte des perfectionnements compatibles avec les deux modes de réalisation d'articulation.

Dans le mode de réalisation le plus couramment employé, dans lequel les boules condyliennes sont solidaires des branches verticales du membre inférieur, pour reproduire les mouvements de la mâchoire, les logements du moyeu sont habituellement limités par une rampe de guidage supérieure inclinée vers l'avant d'un angle reproduisant la pente condylienne; une rampe latérale intérieure plane, ou aile de BENNETT, perpendiculaire à la rampe supérieure et ouverte vers l'avant d'un angle reproduisant l'angle de BENNETT, limite le mouvement de la boule dans le sens transversal; une paroi postérieure limite les mouvements de la boule vers l'arrière tout en permettant les mouvements transversaux. Les moulages de mâchoires inférieures et supérieures sont adaptés sur le dispositif au moyen de plaques de montage se fixant sur la partie centrale de la platine inférieure et de la platine supérieure.

Pour reproduire fidèlement les mouvements de la mâchoire et les adapter à la morphologie de la plupart des individus, certains articulateurs permettent de régler l'inclinaison des rampes supérieures ou pentes condyliennes et l'orientation des ailes de BENNETT.

Dans certains dispositifs, on a prévu en outre de rendre réglables en translation latérale les ailes de BENNETT l'une par rapport à l'autre: un rapprochement des deux ailes de BENNETT l'une vers l'autre, en relation avec un écartement constant des boules condyliennes, produit un jeu qui permet de reproduire le mouvement dit le déplacement latéral immédiat, c'est-à-dire une translation transversale du membre supérieur par rapport au membre inférieur, les boules condyliennes restant en contact de la paroi postérieure, avant de reproduire un mouvement de BENNETT par glissement d'une boule contre l'aile de BENNETT correspondante. Des moyens permettent de maintenir en relation centrée le moyeu afin d'éviter sa translation transversale et son déplacement latéral immédiat lorsque l'utilisateur veut reproduire un mouvement de rotation pure centrée.

Dans le brevet français 2 431 855, ces moyens comprennent une tige courte montée sur une traverse intermédiaire du membre inférieur, et venant porter de façon sélective dans une gorge périphérique circulaire ménagée sur le moyeu.

Dans la demande de brevet allemand 2 922 153, une tige courte montée oscillante sur une traverse intermédiaire du membre inférieur est sollicitée vers l'avant par un ressort et repousse le membre supérieur pour engager une partie circulaire du moyeu dans des gorges solidaires de la traverse intermédiaire interdisant son déplacement latéral.

Le brevet US 3 350 782 décrit un appareil articulateur conforme au préambule de la revendication 1.

Dans la demande internationale WO 8 001 136, le maintien en centré est assuré par une tige courte enfilée dans un alésage vertical du moyeu supérieur, et dont l'extrémité vient se loger dans une entaille d'une traverse intermédiaire du membre inférieur.

Le maintien en centré du membre supérieur doit être assuré de manière précise. Pour cela tous les dispositifs mentionnés précédemment comportent une traverse intermédiaire, c'est-à-dire surélevée et proche du moyeu, et une tige courte reliant cette traverse et le moyeu. Cette traverse intermédiaire empêche ou gêne considérablement l'accès à la surface linguale des prothèses par l'arrière de l'articulateur. Les moyens d'articulation et configurations utilisés dans ces dispositifs précédents ne permettent pas d'utiliser une tige longue, car ses oscillations transversales inévitables compromettent la précision de centrage. En outre les ressorts produisent une réaction sur le membre supérieur et entravent sa manipulation, et plusieurs dispositifs connus n'assurent pas le centrage du membre supérieur lors de sa rotation autour de son axe condylien.

La présente invention a notamment pour objet d'éviter les inconvénients des dispositifs connus en proposant un articulateur permettant de façon simple le réglage éventuellement assymétrique des mouvements de déplacement latéral immédiat avec maintien sélectif précis en relation centrée par tige longue sans nécessiter de traverse intermédiaire gênant l'accès.

Un autre objet de la présente invention est de réaliser des articulateurs dont les dispositifs de maintien en relation centrées soient particulièrement simples, réglables, faciles et rapides à utiliser, et n'entravent pas la manipulation du membre supérieur.

Selon un autre objet, l'invention permet de réaliser de tels articulateurs comportant un nombre minimum de pièces usinées avec précision, de façon à réduire considérablement le coût de production.

Selon un autre objet de l'invention, l'organisation générale de l'articulateur permet l'adjonction à moindre coût des moyens permettant le déplacement latéral immédiat et le maintien en relation centrée; ainsi, avec les mêmes éléments de base, il est possible de réaliser un articulateur simple sans mouvement latéral immédiat et sans maintien en relation centrée, et par adjonction d'un nombre d'éléments minime, on réalise un articulateur complet c'est-à-dire présentant les possibilités de mouvement latéral immédiat et maintien en relation centrée.

Selon un autre objet de l'invention, cette organisation générale de l'articulateur conduit en outre, sans moyens supplémentaires, à permettre des réalisations dans lesquelles les tolérances d'usinage des pièces mécaniques sont grandes.

Selon un autre objet de l'invention, les moyens de maintien en relation centrée peuvent être adaptés sur des articulateurs de tous types, c'est-à-dire avec boules condyliennes solidaires du membre inférieur ou avec boules condyliennes solidaires du membre supérieur.

Pour atteindre ces objets ainsi que d'autres, la présente invention prévoit d'assurer le maintien en relation centrée par une tige solidaire du moyeu supérieur et articulée sur ce moyeu selon un mouvement de rotation dans le plan de symétrie longitudinal du membre supérieur, la tige venant s'engager dans un logement fixe solidaire du membre inférieur et disposé dans le plan de symétrie longitudinal du membre inférieur au niveau de la platine inférieure; le logement fixe est une gorge verticale, ouverte vers l'arrière du membre inférieur, de section complémentaire à celle de la tige, dans laquelle la tige s'adapte pratiquement sans jeu; la gorge a une hauteur suffisante pour interdire toute oscillation transversale de la tige lorsqu'elle y est introduite. On améliore ainsi sensiblement la précision de maintien en relation centrée du membre supérieur par le fait que la tige, une fois insérée dans le logement, porte sur une partie de sa longueur dans ce logement sans possibilité de déplacement angulaire latéral qui conduirait à un léger déplacement latéral du membre supérieur. La précision requise pour la réalisation de la gorge est relativement faible, ainsi que pour l'articulation de la tige sur le moyeu. Cette disposition permet d'utiliser une tige longue et de disposer le logement fixe aussi bas que la platine inférieure de l'articulateur.

Selon une autre caractéristique de l'invention, l'articulateur comprend en outre un moyen de blocage tel qu'un clips pour maintenir la tige dans la gorge. La tige est vissée dans un alésage taraudé ménagé dans une bague tourillonnant librement sur un axe transversal solidaire du moyeu. La bague porte par sa surface latérale sur les flancs latéraux d'un logement du moyeu dans lequel elle est insérée, de façon à réduire la possibilité de déplacements angulaires latéraux de la tige; cela améliore également la précision du positionnement en relation centrée du membre supérieur. La dimension relativement importante de la bague et des parois du logement et le faible jeu limitent en effet les possibilités de déplacement angulaire de la tige, sans nécessiter un usinage très précis de la bague et de son logement.

Selon une autre caractéristique de l'invention, particulièrement adaptée à des articulateurs dans lesquels les boules condyliennes sont solidaires du membre inférieur, le moyeu comporte un alésage transversal traversant de part en part, dont une partie centrale débouche dans le logement pour le passage de la tige et/ou de la bague et leur fixation à un axe central inséré dans l'alésage; chaque extrémité de l'alésage reçoit la première partie d'un axe latéral dont l'autre partie s'insère dans un alésage prévu dans un boîtier condylien; l'axe latéral est serré dans chacun des alésages par des vis de blocage correspondantes. Cette organisation de l'articulation permet de réduire sensiblement les coûts de fabrication: en effet avec un seul alésage central on peut adapter la tige de maintien en relation centrée et les deux boîtiers condyliens; en outre les boîtiers condyliens sont montés sur des axes avec vis de blocage qui permettent leur rotation pour régler l'inclinaison de la pente condylienne. L'alésage du moyeu est positionné de préférence selon l'axe intercondylien c'est-à-dire un axe passant par les boules condyliennes, de sorte qu'une rotation du moyeu n'induit aucun effort de translation sur la tige.

Selon une autre caractéristique de l'invention, l'articulateur comprend en outre des moyens de guidage pour interdire la rotation de chacun des axes latéraux dans l'alésage du moyeu correspondant, tout en permettant sa translation dans le sens transversal. Ainsi, la vis de blocage de cet alésage sert à régler la translation transversale du boîtier et son écartement par rapport au plan de symétrie longitudinal, assurant le réglage du mouvement de déplacement latéral immédiat; l'autre vis de blocage sert à bloquer en rotation le boîtier sur l'axe pour régler la pente condylienne. Pour la réalisation d'articulateurs sans déplacement latéral immédiat, la vis de blocage de l'axe sur le moyeu peut servir à régler en usine l'écartement des boîtiers et ainsi diminuer les tolérances nécessaires d'usinage des pièces mécaniques, le réglage permettant de rattraper les écarts; les mêmes vis de blocage permettent la réalisation d'articulateurs complets, avec déplacement latéral immédiat, et donc sans nécessiter de pièces supplémentaires.

La gorge a de préférence une section rectangulaire, et reçoit une pièce intermédiaire qui coulisse dans la gorge avec un faible jeu et comporte un alésage borgne dans lequel s'engage la tige de la vis de blocage. On évite ainsi les translations de l'axe lors du serrage de la vis.

D'autres caractéristiques et avantages de la présente invention ressortiront de la description suivante de modes de réalisation particuliers, faite en relation avec les figures jointes parmi lesquelles:

- la figure 1 représente une vue en perspective de l'articulateur selon la présente invention;

- la figure 2 représente une vue de côté du membre supérieur de l'articulateur; et

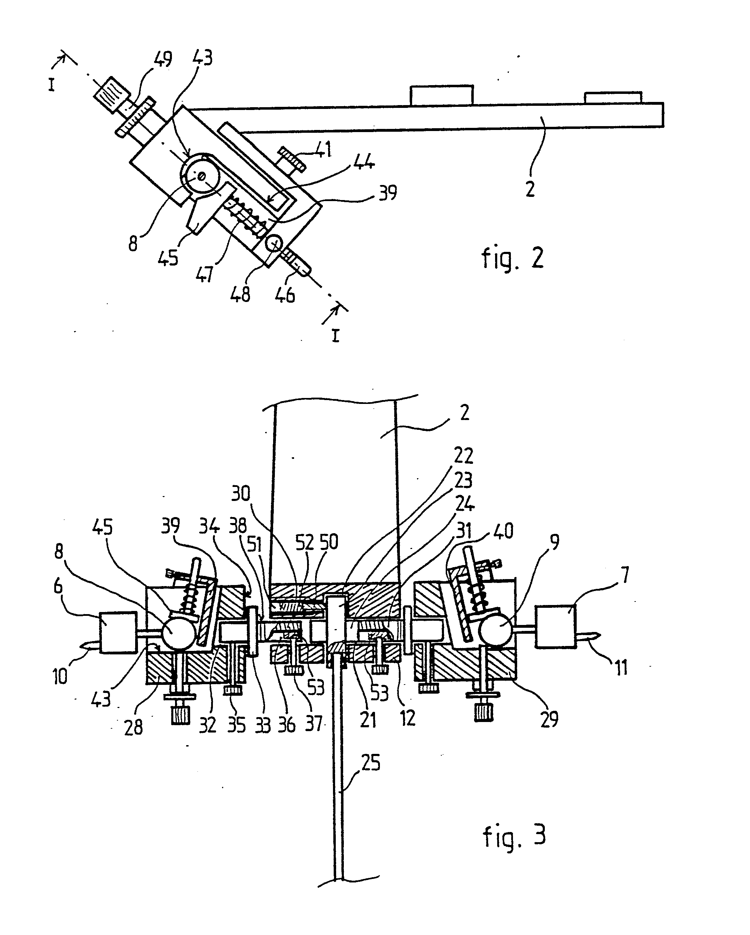

- la figure représente en coupe selon l'axe I-I de la figure 2 une vue de dessous du membre supérieur.

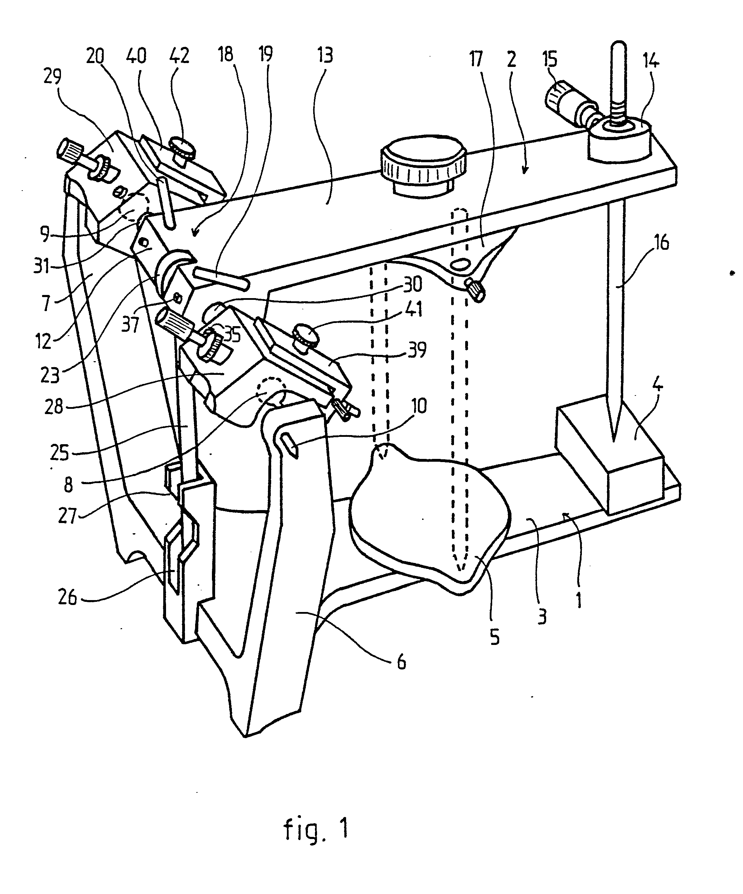

Comme le représente la figure 1, l'articulateur comprend de façon générale un membre inférieur 1 sur lequel s'articule un membre supérieur 2. Le membre inférieur 1 comprend une platine inférieure 3 dont la partie antérieure supporte un plateau incisif 4 pouvant être du type à orientation réglable. La partie centrale de la platine 3 permet l'adaptation d'une plaque de montage inférieurs 5. La partie postérieure de la platine 3 se raccorde à deux branches verticales 6 et 7 dont les zones supérieures supportent chacune une boule condylienne respectivement 8 et 9.

Dans le mode de réalisation représenté sur les figures, les boules condyliennes sont disposées en regard l'une de l'autre et font saillie des faces intérieures des branches verticales 6 et 7.

Sur la partie extérieure de ces branches sont fixés deux axes de pivotement 10 et 11 qui correspondent à l'axe auriculaire et permettent l'adaptation d'un arc facial.

Le membre supérieur 2 est embrochable sur les boules condyliennes 8 et 9, et comporte pour cela un moyeu 12 solidaire d'une platine supérieure 13. La partie antérieure de la platine supérieure 13 comporte un dispositif de guidage et de blocage 14 comportant un canon d'axe vertical et une vis de blocage 15 transversale. Une tige incisive 16 est introduite et bloquée dans le canon pour venir en appui sur le plateau incisif 4 et maintenir en position le membre supérieur.

La partie centrale de la platine supérieure 13 comporte un dispositif de positionnement sur lequel s'adapte une plaque de montage supérieure 17.

Le moyeu 12 comporte sur sa face supérieure 18 deux pieds de stabilisation 19 et 20, lesquels, en relation avec la tige incisive 16, permettent d'avoir une très bonne stabilité en position renversée du dispositif.

Le moyeu 12, comme le représente en coupe la figure 3, comporte un alésage central transversal 21 le traversant de part en part et défnissant l'axe de rotation intercondylien. La partie centrale du moyeu comporte un logement longitudinal 22 dans lequel débouche l'alésage 21, et recevant une bague 23 montée sur un axe central 24 inséré dans l'alésage 21. Une tige 25 est vissée dans un alésage taraudé de la bague 23 et, avec la bague, tourillonne librement autour de l'axe central 24 dans le plan de symétrie longitudinal du membre supérieur 2. La bague a une dimension suffisante et porte selon sa surface latérale contre les flancs latéraux du logement 22 avec un jeu relativement faible pour limiter les oscillations transversales de la tige.

Un pion de friction 50, par exemple en nylon, coulisse dans un alésage secondaire 51 du moyeu 12 et vient porter contre une face latérale de la bague 23, contre laquelle il est repoussé par une vis 52 insérée dans une portion taraudée de l'alésage secondaire. Le pion de friction plaque la bague 23 contre la face latérale opposée du logement 22 pour interdire toute oscillation, et assure simultanément un freinage en rotation pour maintenir la tige dans toutes positions angulaires que l'utilisateur lui donne et éviter qu'elle ne retombe.

Comme le représente la figure 1, l'extrémité libre de la tige 25 vient s'engager en position basse dans un logement 26 du membre inférieur 1, disposé au niveau de la platine inférieure. Le logement 26 est une gorge sensiblement verticale, de section demi circulaire et de hauteur suffisante pour que la tige 25 s'y adapte pratiquement sans jeu et sans possibilité d'oscillations transversales. La tige 25 peut être bloquée dans le fond de la gorge 26 par un clips, en prévoyant par exemple un rétrécissement de la gorge dans ses parois latérales, l'utilisateur pouvant insérer en force la tige dans la gorge pour vaincre l'élasticité de ses parois latérales.

La pièce comportant la gorge 26 sera de préférence munie d'une partie médiane 27 conformée en biseau, comme le représente la figure 1, pour permettre à l'utilisateur d'apprécier manuellement le placage correct de la tige 25 au fond de la gorge 26, et éventuellement de faciliter le maintien de cette tige par une pression du doigt, de sorte que le blocage par clips peut alors être supprimé.

On pourra rendre la pièce supportant la gorge 26 amovible, blocable sur la platine inférieure par exemple par un moyen de fixation tel qu'une vis non représentée sur la figure, la tige 25 étant elle-même escamotable par rotation vers le haut, et amovible par dévissage. La position de la gorge 26 est ainsi réglable par translation transversale, et peut s'adapter exactement au réglage en position de la bague 23 par la vis 52.

Dans le mode de réalisation représenté sur les figures, l'articulation s'effectue sur les boules condyliennes 8 et 9 au moyen de deux boîtiers condyliens 28 et 29 adaptés sur le moyeu 12 au moyen d'axes latéraux respectivement 30 et 31. Comme le représente la figure 3, les boîtiers 28 et 29 sont montés de façon symétrique de part et d'autre du moyeu 12, par des éléments correspondants disposés de façon symétrique. Ainsi, le boîtier 28 comporte un alésage transversal 32. L'axe latéral 30 a sa première partie engagée dans l'alésage 21 du moyeu, et sa seconde partie engagée dans l'alésage 32 du boîtier. Une collerette intermédiaire 33 de l'axe forme butée contre laquelle s'appuie la face intérieure 34 du boîtier 28, une vis de blocage 35 assurant le blocage en rotation du boîtier sur l'axe 30. En débloquant la vis 35, on peut faire effectuer au boîtier une rotation autour de l'axe 30 pour régler la pente condylienne.

La partie de l'axe 30 insérée dans l'alésage 21 du moyeu comporte une gorge longitudinale 36, par exemple de section rectangulaire, dans laquelle coulisse avec un faible jeu une pièce intermédiaire 53 comportant un alésage borgne dans lequel vient s'insérer l'extrémité de la vis de blocage 37. L'alésage borgne de la pièce intermédiaire peut être remplacé par un pion s'engageant dans un alésage axial de la vis 37. Par déblocage de la vis 37, on peut faire effectuer à l'axe 30 un mouvement de translation transversal pour régler l'écartement du boîtier condylien 28 par rapport au plan de symétrie longitudinal du membre supérieur. On a représenté sur la figure 3 le boîtier 28 en position d'écartement maximum, et le boîtier 29 en position rapprochée. Des graduations 38, ménagées sur l'axe 30, permettant de repérer la valeur de l'écartement choisi.

Dans le mode de réalisation représenté sur les figures, les boîtiers 28 et 29 permettent le réglage de l'angle de BENNETT, et comportent pour cela des ailes de BENNETT respectivement 39 et 40 rapportées et réglables en rotation au moyen des vis 41 et 42.

La réalisation d'un mouvement sans déplacement latéral immédiat est obtenue en réglant les axes 30 et 31 selon l'écartement maximum, de façon que les ailes de BENNETT 39 et 40 viennent en appui sur les boules condyliennes correspondantes 8 et 9 lorsque celles-ci sont en appui sur les parois postérieures 43 des boîtiers. Pour régler un mouvement de déplacement latéral immédiat, éventuellement de façon assymétrique, on règle les positions transversales des axes 30 et 31 au moyen des vis de réglage telles que la vis 37 et des graduations 38. Le maintien immédiat en position centrée s'effectue alors par insertion de la tige 25 dans la gorge 26.

Dans le mode de réalisation représenté sur les figures, permettant de nombreuses possibilités de réglages, et l'embrochaque automatique du membre supérieur sur le membre inférieur, les logements des boîtiers sont limités par une rampe de guidage supérieure 44, inclinée vers l'avant d'un angle reproduisant la pente condylienne. La rampe latérale 39 ou aile de BENNETT est perpendiculaire à la rampe supérieure. La paroi postérieure 43 est profilée pour permettre les mouvements transversaux des boules condyliennes. Les logements sont en outre limités vers l'avant par une butée antérieure 45, solidaire de l'aile de BENNETT 39, mobile en translation selon un mouvement antéro-postérieur guidé par une tige de guidage 46 et repoussé vers l'arrière par un ressort 47. Une vis de blocage 48 permet de bloquer la tige et la butée en position intermédiaire quelconque. Comme le représentent les figures, la butée 45 est partiellement enveloppante pour épouser la forme de la boule condylienne 8. Une tige butée 49 traverse la paroi postérieure du boîtier pour repousser vers l'avant la boule condylienne selon des valeurs réglables et blocables pour effectuer certains mouvements particuliers désirés par l'utilisateur.

## Revendications

1. Appareil articulateur pour l'art dentaire, comprenant un membre inférieur (1) dont la partie antérieure forme platine inférieure (3) et supporte un plateau incisif (4), et dont la partie postérieure comprend deux branches verticales (6, 7) entre les extrémités desquelles s'articule un membre supérieur (2) comportant un moyeu postérieur (12) solidaire d'une platine supérieure (13) dont la partie antérieure reçoit une tige incisive (16) venant en appui sur le plateau incisif, l'articulation entre les branches verticales et le membre supérieur comprenant deux boules condyliennes (8, 9) formant rotules, solidaires de l'un des deux membres, et deux logements appropriés solidaires de l'autre membre pour enfermer les boules condyliennes et guider leurs mouvements selon une pente condylienne et un angle de BENNETT, en obligeant le membre supérieur à reproduire les mouvements de BENNETT lors de l'actionnement de la tige incisive, l'articulateur comprenant en outre des moyens pour permettre un déplacement latéral immédiat du membre supérieur (2), et une tige pouvant relier les deux membres articulée sur l'un des deux membres et à débattement dans le plan de symétrie vertical longitudinal de celui-ci de manière à pouvoir s'engager dans une gorge verticale ouverte vers l'arrière ménagée en correspondance dans l'autre membre, cette gorge ayant une section complémentaire à celle de la tige pour obtenir sélectivement le maintien des deux membres en relation centrée, caractérisé en ce qu'il ne comporte pas de traverse intermédiaire entre les branches verticales du membre inférieur, en ce que la tige est articulée sur le moyeu supérieur et en ce que la gorge de centrage est ménagée dans le membre inférieur au niveau de la platine inférieure de telle sorte que la tige s'y adapte pratiquement sans jeu et sur une hauteur suffisante pour interdire toute oscillation transversale de la tige lorsqu'elle y est introduite sur sensiblement toute ladite hauteur.

2. Articulateur selon la revendication 1, caractérisé en ce que la tige est vissée dans un alésage taraudé ménagé sur une bague (23) tourillonnant librement sur un axe transversal (24) solidaire du moyeu, la bague portant selon sa surface latérale contre des flancs latéraux d'un logement du moyeu.

3. Articulateur selon la revendication 2, caractérisé en ce que la bague est freinée en plaquée contre un flanc latéral du logement par un pion de friction (50) monté à coulissement dans un alésage secondaire (51) du moyeu et venant porter contre une face latérale de la bague (23) contre laquelle il est repoussé par une vis (52) insérée dans une portion taraudée de l'alésage secondaire.

4. Articulateur selon l'une quelconque des revendications 1 à 3, dans lequel les boules condyliennes (8, 9) sont solidaires du membre inférieur

(1) et sont insérées dans des logements ménagés dans des boîtiers condyliens (28, 29) solidaires du membre supérieur (2), caractérisé en ce que le moyeu (12) comporte un alésage transversal (21) le traversant de part en part selon l'axe intercondylien, la partie centrale de l'alésage (21) débouchant dans un logement (22) pour le passage de la tige (25) et sa fixation à un axe central (24) inséré dans l'alésage (21), et chaque portion latérale de l'alésage (21) recevant la première partie d'un axe latéral (30) dont l'autre partie s'insère dans un alésage (32) prévu sur un boîtier condylien (28), l'axe étant serré dans chacun des alésages (32) de boîtier par des vis de blocage correspondantes (35, 37).

5. Articulateur selon la revendication 4, caractérisé en ce qu'il comprend en outre des moyens de guidage (36, 37) pour interdire la rotation de l'axe latéral (30) dans l'alésage (21) du moyeu (12) tout en permettant sa translation dans le sens transversal, la vis de blocage (37) de cet alésage servant à régler la translation transversale du boîtier et son écartement par rapport au plan de symétrie longitudinal du membre supérieur, l'autre vis de blocage (35) servant à régler la pente condylienne par rotation de l'axe latéral dans l'alésage du boîtier, une collerette intermédiaire (33) de l'axe restant en butée contre la face intérieure (34) du boîtier (28).

6. Articulateur selon la revendication 5, caractérisé en ce que les moyens de guidage pour interdire la rotation de l'axe comprennent une gorge longitudinale (36) ménagée sur une portion de l'axe latéral (30) et dans laquelle coulisse avec un faible jeu une pièce intermédiaire (53) comportant un alésage borgne dans lequel s'engage l'extrémité de la vis de blocage (37) correspondante.

7. Articulateur selon l'une quelconque des revendications 1 à 6, caractérisé en ce qu'il comprend en outre des moyens de blocage tels qu'un clips pour maintenir la tige dans la gorge.

8. Articulateur selon l'une quelconque des revendications 1 à 7, caractérisé en ce que la gorge (26) est ménagée sur une pièce dont la partie médiane (27) est conformée en biseau pour permettre à l'utilisateur d'apprécier manuellement le placage correct de la tige (25) dans la gorge (26).

9. Articulateur selon l'une quelconque des revendications 1 à 8, caractérisé en ce que la gorge (26) est ménagée sur une pièce rapportée fixée sur la platine inférieure par des moyens de fixation et réglable en position par translation transversale.

**Claims**

1. Articulator apparatus for the dental art, comprising a lower member (1) whose front portion forms a lower plate (3) and supports an incisive plate (4), and whose rear portion comprises two vertical legs (6, 7) between the ends of which is articulated an upper member (2) having a rear hub (12) integral with an upper plate (13) whose front portion receives an incisive rod (16) bearing on the incisive plate, the articulation between the vertical legs and the upper member including two condylar balls (8, 9) forming ball joints, integral with one of the two members, and two appropriate housings integral with the other member for enclosing the condylar balls and guiding their movements along a condylar slope and a BENNETT angle, forcing the upper member to reproduce the BENNETT movements during actuation of the incisive rod, the articulator further comprising means for making possible an immediate lateral movement of the upper member (2), and a rod adapted for connecting the two members together articulated to one of the two members and with free movement in the longitudinal vertical plane of symmetry thereof so as to be able to engage in a vertically rearwardly open groove formed in correspondance with the other member, this groove having a section complementary to that of the rods so as to selectively obtain maintenance of the two members in a centered relation, characterized in that it comprises no intermediate cross piece between the vertical legs of the lower member, in that the rod is articulated to the upper hub and in that the centering groove is formed in the lower member at the level of the lower plate so that the rod fits therein practically without play and over a sufficient height to prevent any transverse oscillation of the rod when it is introduced therein over substantially the whole of said height.

2. Articulator according to claim 1, characterized in that the rod is screwed into a tapped bore formed in a ring (23) freely journalled on a transverse shaft (24) integral with the hub, the ring bearing with its lateral surface against lateral sides of a housing of the hub.

3. Articulator according to claim 2, characterized in that the ring is braked and applied against a lateral side of the housing by a friction pin (50) mounted for sliding in a secondary bore (51) of the hub and bearing against a lateral face of the ring (23) against which it is urged by a screw (52) inserted in a tapped portion of the secondary bore.

4. Articulator according to any one of claims 1 to 3, in which the condylar balls (8, 9) are integral with the lower member (1) and are inserted in housings formed in condylar cases (28, 29) integrally secured to the upper member (2), characterized in that the hub (12) comprises a transverse bore (21) passing therethrough along the intercondylar axis, the central part of the bore (21) opening into a housing (22) for the passage of the rod (25) and fixing thereof to a central shaft (24) inserted in the bore (21) and each lateral portion of the bore (21) receiving the first part of a lateral shaft (30) whose other part is inserted in a bore (32) provided in a condylar case (28), the shaft being clamped in each of the case bores (32) by corresponding locking screws (35, 37).

5. Articulator according to claim 4, characterized in that it further comprises guide means (36, 37) for preventing rotation of the lateral shaft (30) in the bore (21) of the hub (12) while allowing translational movement thereof in the transverse direction, the locking screw (37) of this bore serving for adjusting the transverse translational movement of the case and its spacing with respect to the longitudinal plane of symmetry of the upper member, the other locking screw (35) serving for adjusting the condylar slope by rotation of the lateral shaft in the bore of the case, an intermediate collar (33) of the shaft remaining in abutment against the inner face (34) of the case (28).

6. Articulator accortind to claim 5, characterized in that the guide means for preventing rotation of the shaft comprise a longitudinal groove (36) formed in a portion of the lateral shaft (30) and in which there slides, with a slight clearance, an intermediate piece (53) including a blind bore in which is engaged the end of the corresponding locking screw (37).

7. Articulator according to any one of claims 1 to 6, characterized in that it further comprises locking means such as clips for holding the rod in the groove.

8. Articulator according to any one of claims 1 to 7, characterized in that the groove (26) is formed in a piece whose median part (27) is bevelled so that the user can estimate manually the correct application of the rod (25) in the groove (26).

9. Articulator according to any one of claims 1 to 8, characterized in that the groove (26) is formed in an added piece fixed to the lower plate by fixing means and adjustable in position by transverse translation.

**Patentansprüche**

1. Schwenkvorrichtung für die Zahntechnik, die ein Unterelement (1) aufweist, dessen Vorderteil eine Unterplatte (3) bildet und eine Einschnittsebene (4) trägt, und dessen Hinterteil zwei Vertikalarme (6, 7) aufweist, zwischen deren Enden ein Oberelement (2) angelenkt ist, das eine Hinternabe (12) umfasst, die einstückig mit einer Oberplatte (13) ist, deren Vorderteil einen Schnittstift (16) aufnimmt, der zur Anlage auf der Einschnittsebene kommt, wobei die Schwenkbewegung zwischen den Vertikalarmen und dem Oberelement zwei Gelenkkugeln (8, 9) aufweist, die Gelenklager bilden, und zwar einstückig mit einem der zwei Elemente, und zwei geeignete mit dem anderen Element einstückige Lager, um die Gelenkkugeln einzuschliessen und ihre Bewegungen gemäss einer Gelenkneigung und einem BENNETT-Winkel zu führen, wobei das Oberelement veranlasst wird, die BENNETT-Bewegungen bei der Betätigung des Schnittstiftes zu reproduzieren, wobei die Schwenkvorrichtung zusätzlich Mittel aufweist, um eine unmittelbare Querverschiebung des Oberelementes (2) zu gestatten, und einen Stift, der die zwei Elemente verbindet, der an einem der beiden Elemente angelenkt ist und zwar zur Schwingung in ihrer longitudinalen vertikalen Symmetrieebene dergestalt, dass er in eine offene vertikale Rille nach rückwärts eingreifen kann, die entsprechend in dem anderen Element angeordnet ist, wobei diese Rille eine komplementären Abschnitt zu dem des Stiftes hat, um wahlweise die Stützung der beiden Elemente in zentrierter Beziehung zu erhalten, dadurch gekennzeichnet, dass sie keine Querverbindung zwischen den Vertikalarmen des Unterelementes umfasst, dass der Stift an der Obernabe angelenkt ist, und dass die Zentrierungsrille in dem Unterelemente auf der Höhe der Unterplatte dergestalt angeordnet ist, dass der Stift sich daran praktisch ohne Spiel und auf einer genügenden Höhe anpasst, um jede transversale Oszillation des Stiftes zu verhindern, wenn er darin über die ganze Höhe eingebracht ist.

2. Schwenkvorrichtung nach Anspruch 1, dadurch gekennzeichnet, dass der Stift in eine Gewindebohrung geschraubt ist, die an einem Ring (23) angeordnet ist, der frei um eine transversale Achse (24) rotiert, welche einstückig mit der Nabe ausgebildet ist, wobei der Ring längs seiner Seitenfläche gegen Seitenkanten einer Lagerung der Nabe anstösst.

3. Schwenkvorrichtung nach Anspruch 2, dadurch gekennzeichnet, dass der Ring gedämpft gebremst ist und gegen eine Seitenkante der Lagerung durch einen Reibkörper (50) anschlägt, der gleitend in einer zweiten Bohrung (51) der Nabe befestigt ist und gegen eine Seitenfläche des Rings (23) stösst, gegen die er durch eine Schraube gedrückt ist, die in ein Gewindeteil (52) der zweiten Bohrung eingeführt ist.

4. Schwenkvorrichtung nach einem der Ansprüche 1 bis 3, wobei die Gelenkkugeln (8, 9) einstückig mit dem Unterelement (1) sind und in die Lagerungen eingeführt sind, die in den Gelenkkästen (28, 29) angeordnet sind, einstückig mit dem Oberelement (2) dadurch gekennzeichnet, dass die Nabe (12) eine transversale Bohrung (21) aufweist, die sie vollständig längs der Gelenk-Zwischenachse durchsetzt, wobei der Mittelteil der Bohrung (21) in eine Lagerung (22) führt für die Bewegung des Stiftes (25) und seine Befestigung mit einer Mittelachse (24), die in die Bohrung (21) eingeführt ist, wobei jedes Seitenteil der Bohrung (21) den ersten Teil einer Querachse (30) aufnimmt, deren anderer Teil in einer Bohrung (32) eingeführt ist, die an einem Gelenkkasten (28) vorgesehen ist, wobei die Achse in jeder der Bohrungen (32) des Kastens durch entsprechende Sperrschrauben (35, 37) gehalten ist.

5. Schwenkvorrichtung nach Anspruch 4, dadurch gekennzeichnet, dass sie darüber hinaus Führungsmittel (36, 37) aufweist, um die Rotation der Querachse (30) in der Bohrung (21) der Nabe (12) zu verhindern, wobei ihre Translation im transversalen Sinne erlaubt ist, wobei die Sperrschraube (37) dieser Bohrung dazu dient, die transversale Translation des Kastens und seinen Abstand bezüglich der longitudinalen Symmetrieebene des Oberelementes zu regeln, wobei die andere Sperrschraube (35) dazu dient, die Gelenkneigung durch Rotation der Querachse in der Bohrung des Kastens zu regeln, wobei ein Zwischenflansch (33) der Achse in stossender Anlage gegen die Innenflächen (34) des Kastens (28) bleibt.

6. Schwenkvorrichtung nach Anspruch 5, dadurch gekennzeichnet, dass die Führungsmittel zum Verhindern der Rotation der Achse eine longitudinale Rille (36) aufweisen, die an einem Teil der Querachse (30) angeordnet ist, und in der ein Zwischenstück (53) mit einem kleinen Spiel gleitet, das eine Blindbohrung aufweist, in die das Ende der entsprechenden Sperrschraube (37) eingreift.

7. Schwenkvorrichtung nach einem der Ansprüche 1 bis 6, dadurch gekennzeichnet, dass sie darüber hinaus so beschaffene Sperrmittel wie einen Clip zum Stützen des Stiftes in der Rille aufweist.

8. Schwenkvorrichtung nach einem der Ansprüche 1 bis 7, dadurch gekennzeichnet, dass die Rille (26) an einem Stück angeordnet ist, dessen Mittelteil (27) in der Schräge angepasst ist, um einem Benutzer zu erlauben, die korrekte Einlage des Stiftes (25) in der Rille (26) mit der Hand abzuschätzen.

9. Schwenkvorrichtung nach einem der Ansprüche 1 bis 8, dadurch gekennzeichnet, dass die Rille (26) an einem Stück angeordnet ist, das in fester Beziehung zur Unterplatte durch Befestigungsmittel steht, die in der Position durch eine transversale Translation regelbar sind.

fig. 1

fig. 2

fig. 3